# EUROPEAN PATENT APPLICATION

(11) **EP 4 848 617 A1**
(43) Date of publication of application: **02.12.2026**
(21) Application number: 25178955.8
(22) Date of filing: 27.05.2025
(51) Int. Cl.: H04B 7/185, H04L 5/14, H04W 56/00, H04W 72/0446

(54) **ROUND TRIP TIME (RTT) DEPENDENT TIME DIVISION DUPLEXING (TDD) MODE OPERATION PATTERNS FOR NON-TERRESTRIAL NETWORK (NTN)**

(71) Applicant: Nokia Technologies Oy, 02610 Espoo (FI)
(72) Inventor: WIGARD, Jeroen, Klarup (DK); FREDERIKSEN, Frank, Klarup (DK); MEDEIROS DE AMORIM, Rafhael, Aalborg (DK); LAURIDSEN, Mads, Gistrup (DK)
(74) Representative: Bryers Intellectual Property Ltd

(57) **Abstract**

Example embodiments of the present disclosure are directed to methods, devices, apparatuses, computer readable storage medium and computer program for configuring TDD mode operations in a serving cell. An example solution includes: receive, from at least one non-terrestrial network node (NTN) in a serving cell, a configuration indicating at least one of: an uplink and downlink (UL-DL) period of a periodic pattern for a time division duplexing (TDD) mode operation as a function of round-trip time (RTT), and a sharing ratio for UL transmissions/DL receptions; and adjust or determine, based on the configuration according to the function of the round-trip time, to be used for the TDD mode operation in the serving cell.

## Description

### FIELD

Various example embodiments of the present disclosure generally relate to the field of telecommunication and in particular, to methods, devices, apparatuses and computer readable storage medium to enable a user equipment (UE) to seamlessly switch between terrestrial and non-terrestrial network (NTN) nodes.

### BACKGROUND

The key idea of NTN, or Non-Terrestrial Networks, refers to the use of satellites or NTN nodes for cellular communication to extend cellular coverage to areas where terrestrial networks may not be feasible, such as remote areas, disaster zones, and maritime environments; and to integrate satellite communication into the existing cellular infrastructure. The satellite may move as a function of time (at least if it is a satellite in low earth orbit (LEO), where the satellite may be moving with a speed of ~7500 m/s. In case of (quasi) earth fixed cells, the cell stays constant on earth, while the satellite beam may be continuously adjusted to ensure the same cell area is served during the flight of the satellite. Time division duplexing (TDD) mode operation in NTN node is challenging and may be problematic due to its changing locus relative to the UEs.

### SUMMARY

Example embodiments of the present disclosure are directed to methods, apparatuses, computer readable storage medium and computer program for function dependent TDD mode operation communication with non-terrestrial networks. An example solution for a user equipment (110) for wireless communication, includes: receive (410, 510), from at least one non-terrestrial network node (NTN) (120) in a serving cell (130), a configuration indicating at least one of: an uplink and downlink (UL-DL) period (TA) of a periodic pattern (PA) for a time division duplexing (TDD) mode operation as a function of round-trip time (RTT), and a sharing ratio (K) for UL transmissions/DL receptions; and adjust or determine (430, 530), based on the configuration according to the function of the round-trip time (RTT), to be used for the TDD mode operation in the serving cell (130).

Another example solution includes: a non-terrestrial network (NTN) node (110) serving a serving cell (130) includes: transmit (410, 410) to at least one user equipment (UE) (110), a configuration indicating at least one of: an uplink and downlink (UL-DL) period (TA) of a periodic pattern (PA) for a time division duplexing (TDD) mode operation as a function round-trip time (RTT), and a sharing ratio (K) for UL-DL transmissions/receptions; and transmit to, or receive from the at least one user equipment (110), a frame structure of the UL-DL that matches the indicated periodic pattern (PA).

### BRIEF DESCRIPTION OF THE DRAWINGS

Some example embodiments may now be described with reference to the accompanying drawings, where:
FIG. 1 illustrates a communication environment (100) which shows different positions of a NTN node (120) communicating to multiple UEs (110a, 110b) in a fixed cell (130) on earth, according to an example embodiment of the present disclosure;
FIG. 2 illustrates differential delays to TDD mode operations, between a NTN node (120) and UEs (110a, 110b) in different positions within the cell (130), according to an example embodiment of the present disclosure;
FIG. 3A to 3D illustrate adjusted TDD mode operations as a function of round trip time RTT, elevation angle Θ of the a NTN node (120) or time t, and a UL/DL sharing ratio (K) within a time period (TA); according to respective embodiments of the present disclosure;
FIG. 4 illustrates a flowchart of a function adjusted TDD mode operation and sharing ratios (K) for UL/DL within a period (TA); according to an example embodiment of the present disclosure;
FIG. 5 illustrates signaling flows communication between a UE (110) and a NTN node (120), according to some example embodiments of the present disclosure;
FIG. 6 illustrates a simplified block diagram of a device (1200) within a UE (120) or a NTN node (120) that is suitable for implementing example embodiments of the present disclosure.

Throughout the drawings, the same or similar reference numerals may represent the same or similar element.

### DETAILED DESCRIPTION

The present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below. Where applicable, references may be used in multiple figures to illustrate the different embodiments or implementations.

In the following description and claims, unless defined otherwise, all technical and scientific terms used herein have the same meaning as commonly understood by one of ordinary skills in the art to which this disclosure belongs.

The term "device" may include circuitry that covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit within an apparatus, a user equipment (UE), a mobile device, a terrestrial network (TN) node or a non-terrestrial network (NTN) node, or a similar integrated circuit in a server, a cellular network device, or other computing or network device.

In addition, the term "non-terrestrial network node" and "satellite" may be used interchangeably, and the term "time" and "time instance" may be used interchangeably. The term "apparatus" (if used) may refer to a user equipment or a network node, depending on the context of the description.

TDD mode operation in NTN may be understood as: when satellite (120) is transmitting (T) and UE (110a or 110b) is receiving (R), this is normally what is defined as downlink (DL), while for the opposite link direction, when a satellite (120) is receiving (R), and UE (110a or 110b) is transmitting (T), this is denoted uplink (UL).

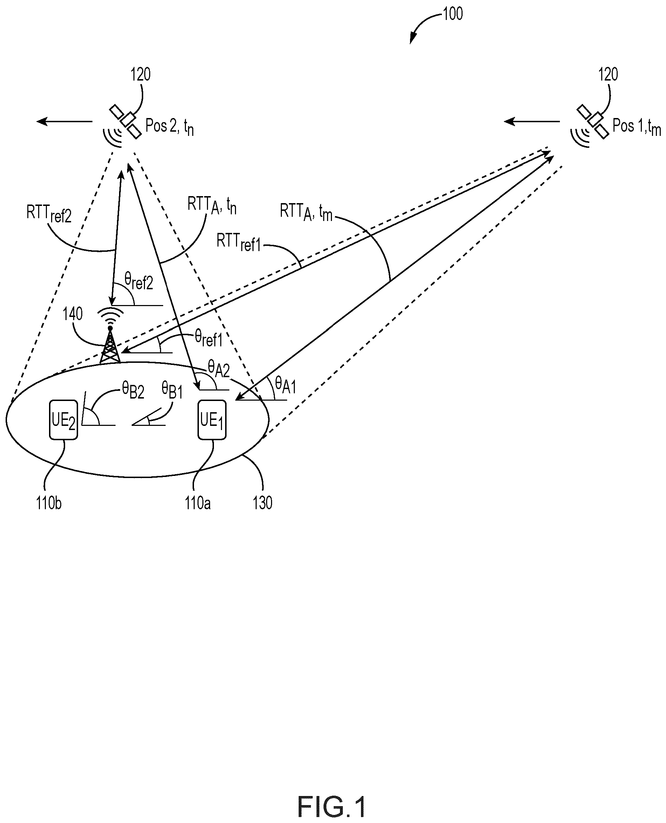

FIG. 1 illustrates a communication environment (100) which shows different positions of a NTN node (120) communicating to multiple UEs (110a, 110b) in a fixed cell (130) on earth, according to an example embodiment of the present disclosure. The communication environment (100) illustrates a NTN node (120) at different elevation angles with at least one user equipment UEs (110a, 110b) in time lapses performing TDD mode operations with a fixed cell (130) on earth.

In a Time Division Duplex (TDD) cycle, Round Trip Time (RTT) refers to the time it takes for a signal to travel from a transmitter (e.g., NTN node (120)) to a receiver and then back to the transmitter.

Time division duplexing (TDD) mode operation in a NTN node (120) is challenging and may be problematic due to its changing locus relative to the UEs (110a, 110b) , i.e., they change with the movement of the NTN node (120), and the NTN node (120) moves as a function of time, resulting in dynamic variations in delay measurements. DL signals sent at time instance (tₘ or tₙ) from the NTN node (120) should reach a UE (e.g., 110a) when the UE (110a) is not transmitting in UL mode. However, other UE (e.g., 110b) located at another position within the cell (130) may experience a different delay in parameters, such as round trip time (RTT), elevation angle Θ, receiving time (i.e., Coordinated Universal Time (UTC)), hyper-system frame number (H-SFN), to name a few, which differences in propagation delay may result in the other UE (110b) not able to receive a DL signal or when the other UE (110b) should not be transmitting in UL.

Methods are therefore proposed in this disclosure to exploit a propagation delay (e.g., RTT_{A}/2 at tₘ or RTT_{B}/2 at tₙ) between one or more UEs (110a, 110b) in relation with a NTN node (120) to facilitate efficient TDD mode operation to each of the one or more UEs (110a, 110b). More specifically, the methods utilize the fact that the one or more UEs (110a, 110b) and the NTN node (i.e., gNB) (120) may transmit a signal simultaneously at the different time instances (t₁, t₂, ...), yet still be able to exchange transmissions between the NTN node (120) and the respective UEs (110a, 110b), utilizing a defined propagation delay to provide enough time to switch in at least one of the respective UEs (110a, 110b), from a transmission mode (T) to a reception mode (R) during the TDD mode operations.

As illustrated in FIG. 1, a satellite (120) providing an earth fixed cell (130) is shown. In case of (quasi) earth fixed cells, the cell (130) may stay constant on earth (at least for a period of time), i.e. a satellite beam may be continuously adjusted to ensure that the same cell area (130) on Earth is served during the fly over. Alternatively in case of earth moving cells, the cell (130) may move with same speed as the satellite (120) across earth.

FIG.1 shows two positions (Pos 1, Pos2) of the satellite (120) due to satellite movement. In position 2 (Pos 2, tₙ) the satellite (120) may have traveled to almost right above the cell area (130) near a 90 degree elevation angle Θ_{A2} at which a delay and RTT_{B} (like 4 ms RTT in case of a satellite at 600 km) may be near the minimum, whereas in an earlier position 1 (Pos 1, tₘ) the distance to the cell area (130) is much longer at a lower elevation angle Θ_{A1} such as at 30 degree elevation angle Θ_{A1}, the RTT_{A} may be 8 ms. Thus the TDD operation may get more complicated as the signals travelling in the downlink (DL) direction may reach the earth (and the UEs 110a, 110b) at times where the UEs may be transmitting in the uplink (UL) direction. In other words, the delay of the (DL or UL) signals is continuously changing due to the satellite movement. One approach to a solution may be to designate sufficient safety margins (i.e., in anyone of the RTT, elevation angle Θ, or time t) between the uplink operations and downlink operations to avoid conflicts. However, this approach may lead to a rather inefficient or reduced TDD mode operations. Furthermore, a larger NTN cell (130) diameter may result in a larger differential delay (i.e. difference of RTT between the UE (e.g., UE₁ (110a)) having the shortest RTT_{A} and the UE (UE₂ (110b)) having the longest RTT_{B}) to require an even bigger safety margin to further reduce the TDD mode operation efficiency.

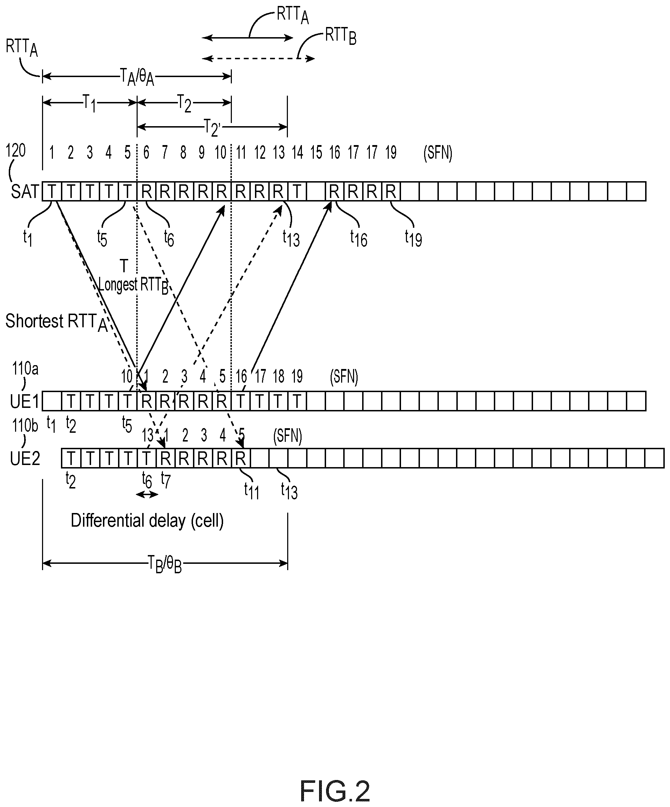

FIGs. 1 and 2 illustrate a NTN node (120) serving a plurality of UEs (110a, 110b) having different round trip time (RTT) within cell (130). In an example, the TDD mode operation may also be regarded as a function of signal propagation parameter to be expressed in anyone of following parameters: (1) RTT, (2) elevation angle Θ of the a NTN node (120) or (3) time t, according to respective embodiments of the present disclosure.

As illustrated in FIG. 1, there are two UEs, UE1 (110a) and UE2 (110b) at different geographical locations within the cell (130). For example, UE1 (110a) may be geographically closer to the NTN node (120). UE1 at time tₘ when NTN node (120) is at position 1, therefore would have a round trip time RTT_{A} which is shorter than the round trip time RTT_{B} of UE2 which is further located (i.e., at a lower elevation angle Θ_{A1>} Θ_{B1} or further away from the satellite in terms of the geometrical/propagation distance between the UE2 (110b) and the NTN node (120)). At a later time tₙ the satellite may move to position 2 which is closer to UE2, this may result in a change in elevation angle Θ_{B2} > Θ_{A2}, such that RTT_{A} being longer than RTT_{B}.

FIG.2 illustrates that due to the different RTTs, UE1 (110a) may receive a first DL transmission, performed by the NTN node (120) in subframe SF1, at time t₁, earlier (in t₆) as compared to UE2 (110b), which receives the first DL transmission at time t₇. The longer RTT_{B} however entails that the UE2 (110b) may transmit at t₆, where UE1 (110a) may be receiving from the NTN node (120). Thus, UE1 (110a) may need to perform the final UL transmission at time t5.

The satellite (120) may perform the final DL transmission at t₅, which may result in UE1 and UE2 both receiving the final DL transmission at t10 and t11, respectively. After receiving the final transmission, the UEs (UE1, UE2) may start transmission towards the NTN node (120), provided the satellite at the time when receiving these transmissions is not transmitting itself.

It is also shown in FIG. 2 that a round trip time (RTT_{A}) of 10 ms between UE₁ (110a) and NTN node (120) due to the position of the UE within the cell (130) In FIG. 2 a 10 subframes time division duplexing (TDD) mode operation is shown . In this example, the 10 subframes TDD mode operation may be distributed to be. During DL period T1 (time t₁ to t₅), NTN node (120) may transmit five subframes which are received during period T2 (time t₆ to t₁₀) as DL SF1 to SF5 by UE₁ (110a). Simultaneously during UL period T2 (time t₆ to t₁₀), NTN node (120) may receive five subframes SF6 to SF10 transmitted by UE₁ (110a) during period T1 (time t₁ to t₅) as UL.

The proposed solution exploits the maximum RTT delays among the plurality of UEs (110a, 110b) and the NTN node or gNB (120) to our benefit, by allowing both sides (UEs and NTN node) to transmit (T) or receive (R) at the same time. While this maximum RTT delays may work out with a NTN node (120) as when the (DL/UL) signals arrive at the other end the transmit mode has changed to receive mode on both sides, the same proposed maximum RTT delays scheme, however, may not be applicable in a terrestrial network (TN) node since the propagation delay in a TN node is much shorter.

Now obviously as there are different RTT for the different UEs in the cell (due to the differential delay), there needs to be a safety margin /switching period for some UEs. Thus, one might treat the RTT variations within the cell to play a role in determining a maximum time tₘₐₓ taken to transmit signals in one or both directions with at least three possible variations.

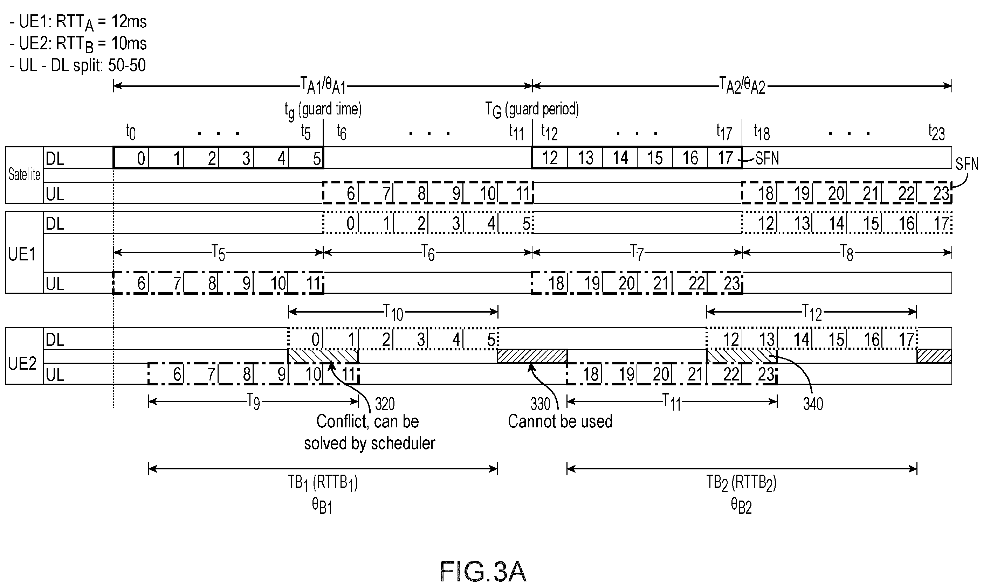

It will become clear from the examples below in FIGs. 3A to 3D, if anyone of the following rules or aspects may be kept to avoid UL/DL conflicts:
(A) UL - DL period (T_{A}) needs to be set to the maximum round trip time RTTₘₐₓ among all UEs.
(B) UEs with a smaller RTT than the maximum RTTₘₐₓ, may lose UL opportunities where the number of lost opportunities may be a function of the differential delay. It may also be that the UE with the largest delay loses UL opportunities. This is a design choice. Whether this is the UEs with shorter or longer RTT may be a deployment choice.
(C) This UL opportunities loss may be mitigated by not scheduling these UEs during the first frames of the downlink transmit period, where the number of frames may be a function of the differential delay.

Regarding aspect (A): The DL-UL period (T_{A}) may be a function of the RTT and the RAN (radio access network) may share the function between RTT and the UL-DL period (T_{A}) with the UE (110a, 110b) in the following different ways.
(1) RAN (radio access network) may provide the UL-DL period (T_{A}) as function of time t in broadcast (SIB) or via dedicated signaling (RRC) after initial access (the latter part being part as the handover preparation message in case of a UE being handed over from one cell/satellite to another). In an embodiment, the time t may be referenced to one of: an absolute time based on coordinated universal time (UTC), or a hyper frame number (HFN) of the NTN. Then the switching may be based on absolute time instances, e.g. switching at 1 PM and 2 PM or H-SFN = 5 and H-SFN = 200, etc.
   (a) In one embodiment the UL-DL period (T_{A}) includes the guard period (T_{G}) between consecutive periods (T_{A1}, T_{A2...} ).
      (i) In another embodiment also the guard time (t_{g}) between UL and DL within the UL-DL period (T_{A}) is indicated.
   (b) In another embodiment the guard times (t_{g}) may be preconfigured and the UL-DL period (T_{A}) is rounded upwards to the next frame/symbol according to a pre agreed rule.
   (c) Time t can be expressed based on sequence frame number (SF1, SF2... SFn) and the UL-DL period (T_{A}) may be provided in number of subframes and/or symbols.
   (d) To limit the signaling, RAN may provide the time instances (t₁, t₂...t_{X}) where the UL-DL period changes and the corresponding new periods (T_{A1}, T_{A2...} ).
(2) RAN may provide the UL-DL period (T_{A}) as a function of the RTT in the broadcast in dedicated signaling:
   (a) RTT may be based on a reference round trip time (RTT_{ref}) of a reference point (140) in the cell (130), which the UE (110a or 110b) may use to deduce the RTT to get the same understanding as the network (a network node gNB on the ground or a NTN node) on the UL-DL period (T_{A}).
   (b) In another embodiment instead of using RTT as function, an elevation angle Θ to a reference point (140) (based on a reference elevation angle (Θ_{ref})) may be used.
   (c) In yet another embodiment, the UL-DL period (T_{A}) may be provided as a function of another reference time t_{ref}, which may be used as a proxy for RTT (for example, reference times extracted from network parameters such as K_offset, K_mac, etc).

Anyone of the reference round trip time (RTT_{ref}), the reference elevation angle (Θ_{ref}) and the reference time t_{ref}, may be utilized to calculate a geometric distance from the reference point (140) to the NTN node (120) position. Additional embodiments may include: (1) RAN may also provide switching times between uplink and downlink as function of either RTT or time t, assuming the network (120) is aware of the RTT (RTT_{A} or RTT_{B} )of the UE (110a or 110b) or its location. These can be made UE specific with dedicated signaling or broadcasted; (2) RAN may share how the UL-DL period (T_{A}) may be shared between UL and DL: (a) in one embodiment, RAN may provide this as a ratio between UL and DL; (b) in an alternative embodiment, RAN may provide an absolute number of subframes for either uplink or downlink; (c) RAN may also split the RTT period in multiple sub-patterns or in mixed patterns within one RTT. For example, a 10 subframes TDD pattern of TTTTTRRRRR may also be dynamically configured into TTTRRTTRRR within one RTT, with guard times (t_{g}) in between T and R switching operation, and guard periods (T_{G}) between consecutive periods (T_{A1}, T_{A2...} ).

The UEs may determine from these values (i.e., UL/DL ration) the TDD pattern dynamically, which are updated based on the RTT or time t. The UE therefore may transmit/receive according to the UL-DL periods (T_{A}) and may adjust the UL-DL pattern splits after every RTT cycle.

As network (i.e., gNB or NTN node (120)) and UEs (110a, 110b) need to have the same understanding and the time granularity may be limited to subframes (or symbols) rules for switching to the 'next RTT' would need to be agreed. The switching points may be based on the RTT, a minimum granularity (symbols, subframes), which may be referred to a duration as x. In one implementation of the example, a next RTT value may be used when a ceiling (RTT/x) reaches a next integer (e.g. in terms of ms, symbols, subframes or slots). For example, if x=1 ms and RTT = 3.2 ms then ceiling (RTT/x)=4 ms and thus the next RTT may use a value of 4ms.

Furthermore, when some downlink signals may need to come regularly like the SSB with a MIB (master information block), certain frames may need to be downlinked. This may be accommodated by allowing only a subset of distributions, which are provided to the UE beforehand, i.e. the UL-DL pattern P_{A} may only be adjusted to certain splits, where certain splits can be consisting of concatenation of certain patterns. One example may be that every 20th ms is DL and used for SSB, which means those 20th slots are DL and the n rest is fitted around it.

FIG. 3A to 3D illustrate function adjusted TDD mode operations and sharing ratios (K) for UL/DL within a period (T_{A}); according to several example embodiments of the present disclosure. In an example, TDD mode operation may be adjusted as a function of RTT based on a reference round trip time (RTT_{ref}) of a reference point (140) in the cell (130), which the UE (110a or 110b) may use to deduce the RTT to get the same understanding as the network (a network node gNB on the ground or a NTN node) on the UL-DL period (T_{A}).

Referring to an example in FIG. 3A: there illustrates a configuration strategy of a sharing ratio of uplink, downlink pattern P_{A} of 50-50% (i.e., equal number of subframes in UL-DL period (T_{A1})). It is shown in FIG. 3A, during a first TDD mode operation, the NTN node (NTN node) (120) has a UL-DL period (T_{A1}) of 12 ms (or at an elevation angle of Θ_{A1}) with DL operation to transmit to both UE1 and UE2, subframes SF0 to SF5 during period T₅ (t₀ to t₅), and UL operation to receive from both UE1 and UE2, subframes SF6 to SF11 during period T₆ (t₆ to t₁₁).

UE1 (e.g., 110a) has the same UL-DL pattern as the NTN node (120), with a RTT_{A}=12 ms, receiving DL frames SF0 to SF5 from the NTN node during period T₆ (t₆ to t₁₁), and a UL transmission of subframes SF6 to SF11 during period T₅ (t₀ to t₅), which the NTN node receives from UE1, subframes SF6 to SF11 during period T₆ (t₆ to t₁₁). The next TDD mode operations for UE1 may repeat to continue to synchronize with the NTN node (120) when the satellite (120) in a next UL-DL period (T_{A2}) may have moved to a next locus in the orbit (or at an elevation angle of Θ_{A2}).

In an the same example, UE2 (e.g., 110b) may be located closer to the NTN node (120) in the cell (130) (or at a larger elevation angle of B_{B1}) to receive 1 ms earlier, the DL frames SF0 to SF5 from the NTN node (120) during period T₁₀ (t₅ to t₁₀), and may also transmit an UL subframes SF6 to SF11 with a 1ms differential delay during period T₉ (t₀ to t₅) to result in a conflict (320) in the shaded time slots (t₅ and t₆), which UE2 cannot both DL subframes SF0, SF1 and UL subframes SF10, SF11 in time slots t₅ and t₆. UE2 has an effective RTT_{B}=10 ms (t₁ to t₁₀), which is a shorter RTT.

To resolve the conflict (320) in UE2, while keeping UE 1 in full TDD mode operation, UE1 and UE2 may receive from the NTN node, a configuration that is based on a rule of a RTT function, by configuring the RTT with a maximum value (i.e., RTT_{A1} with 12 ms) or using a lower elevation angle Θ_{A1}, and resolve the conflict in UE2 by 2 options: (a) UE2 not scheduling downlink in those time slots (t₅ and t₆) and scheduling in the uplink; or (b) UE2 not using the conflict time slots for UL, and provide a higher priority to receiving DL subframes SF0 and SF1 in the time slots (t₅ and t₆). The choice of configuration option (a) or (b) are to be decided by the scheduler in UE2.

Alternately, UE2 may be aware of the potential scheduling limitation and may not even react to scheduling information having received an indicating activity on "blocked UL slots". UE2 may thus potentially autonomously block periodic UL transmission if UE2 detects a potential conflict due to short RTT value. Alternately, UE2 with the shortest RTT may altogether not use the conflicted time slots (t₅ and t₆) for UL or DL. The next TDD mode operations for UE2 may repeat with 1ms differential delay to start a next at time slot t₁₃, to form a conflict (330) at time slots (t₁₁, t₁₂) continue to synchronize with the NTN node (120) when the NTN node's next UL-DL period (T_{A2}) has moved to a next locus in the orbit (or at an elevation angle of Θ_{A2}).

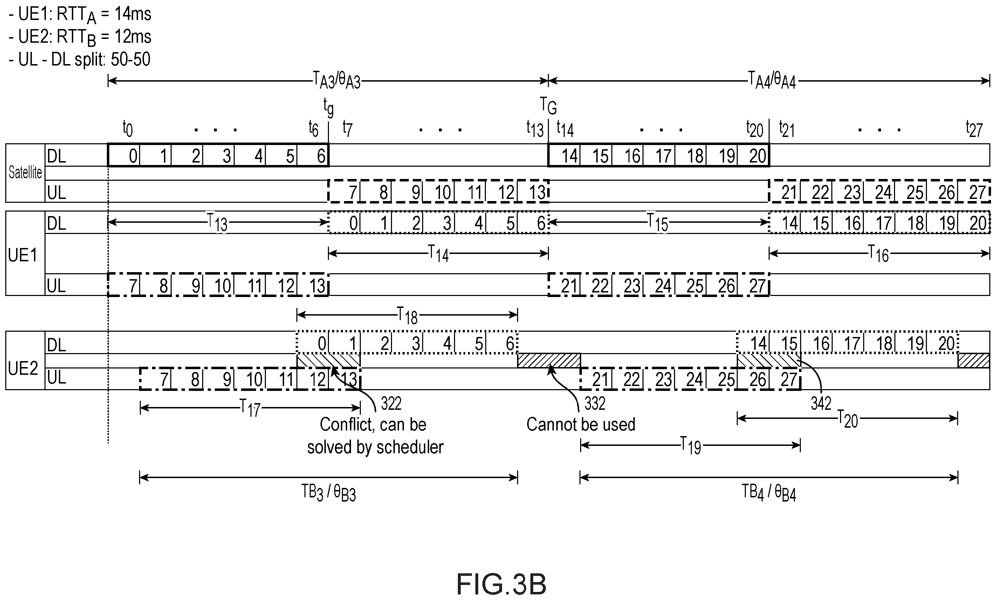

Referring to an example in FIG. 3B: the NTN node (120) may have moved on and the RTT may grow with 14 subframes (SF0 to SF13) as follows: UE1: RTT_{A}=14 ms (T₁₃+T₁₄) and UE2: RTT_{B}=12 ms (T₁₇+T₁₈ -conflict period (322))

The NTN node (120) and UE may change the pattern to the following. Note that the distribution is still 50-50% (7 UL subframes and 7DL subframes) for the network and the UE with the longest RTT. The example description in FIG. 3B is similar to the example description in FIG. 3A, with a DL/UL conflict period (322) in time slots (t₆, t₇) to be resolved by a scheduler in UE2, in like manner as options (a) or option (b), and a DL/UL conflict period (332) which cannot be used for DL or UL mode operation in time slots (t₁₃, t₁₄).

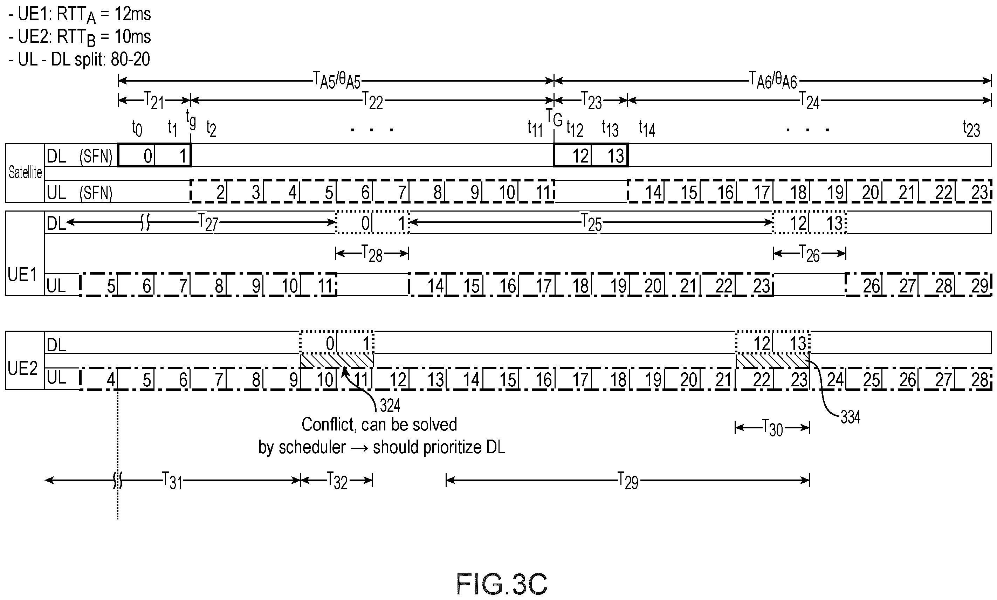

FIG. 3C illustrates an example of 12 subframes (10 UL subframes SF2 to SF11, 2DL subframes SF0 to SF1) with a different uplink-downlink sharing ratio of about 80-20%. It is shown that in FIG. 3C, UE1 has a same UL-DL period T_{A} and same sharing ratio of 80-20% with the NTN node (120) in uplink, downlink pattern P_{A}. UE₁ has a longer RTT_{A}=12 ms (T₂₇+T₂₈), while UE2 has a shorter RTT_{B}=10 ms (T₃₁+T₃₂ -conflict period (324)).

The conflict region (324) or time slots (t₅, t₆) in UE2, may be solved by 2 options: (a) scheduler not scheduling downlink in those conflicted time slots (t₅, t₆), but are prioritized to schedule for uplink SF10 and SF11, thus there is no other time slot left for DL during period T_{A1}; (b) UE2 does not use the conflict period (324) for uplink in those slots (again scheduler decides).

UE2 may be aware of the potential scheduling limitation and will not even react to scheduling information being received indicating activity on "blocked UL slots". Alternately, UE2 may potentially autonomously block periodic UL transmission if UE2 detects a potential conflict due to a short RTT value. The conflict period area (324) cannot be used by the UE2 with the shortest RTT.

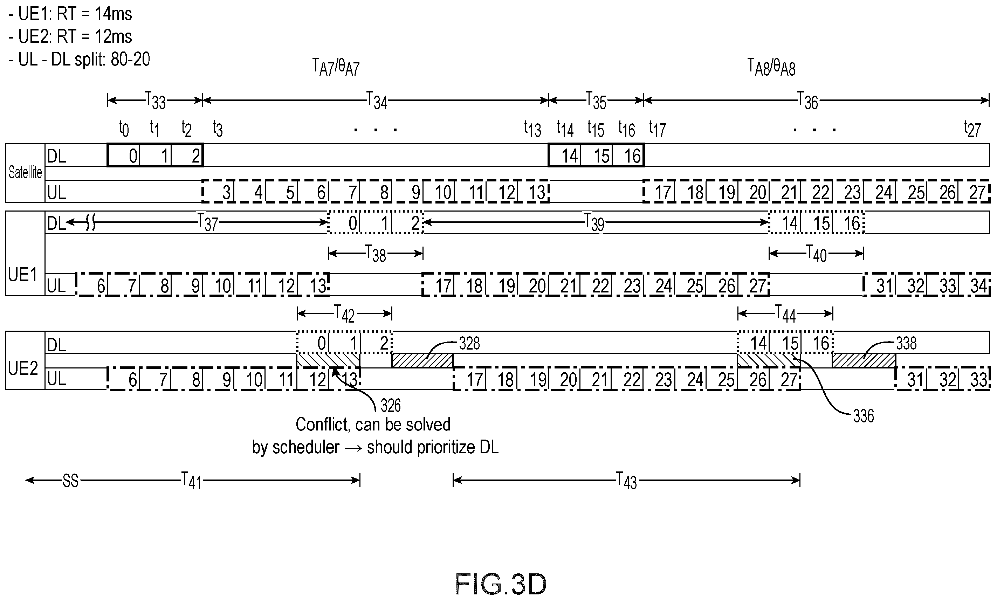

FIG. 3D illustrates an example of 14 subframes (11 UL subframes SF3 to SF13, 3DL subframes SF0 to SF2) with a different uplink-downlink sharing ratio of about 80-20%. Now the satellite moves on and the RTT grows as follows: UE1: RTT_{A}=14 ms (T₃₇+T₃₈), while UE2 has a shorter RTT_{B}=12 ms (T₄₁+_{T42} -conflict period (326)). The Conflict period (326) may be resolved with scheduling for download of SF0, SF1 in time slots (t₆, t₇), or not used by the UE2.

The technical features include: UE receives configuration from a serving cell (130) indicating a period of a periodic pattern P_{A} for a TDD mode transmission as function of a round-trip time (RTT) and a sharing ratio (K) for UL and DL transmissions. The period T_{A} may also be as function of time t or elevation angle Θ.

It should be noted that: all of these functional parameters (RTT, time t and elevation angle Θ) may vary as the satellite or NTN node (120) moves. UE (110a or 110b) may dynamically determine, based on the time t/RTT/elevation angle Θ and the sharing ratio (K) for UL and DL transmission, the pattern P_{A} to be used for a TDD mode transmission. To summarize, the disclosure allows to exploit large propagation delays in NTN (120) for efficient TDD mode operation.

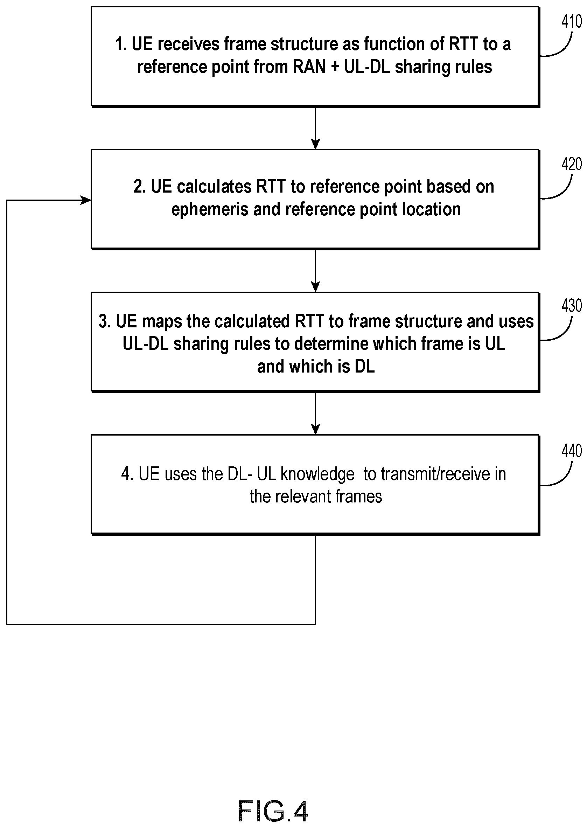

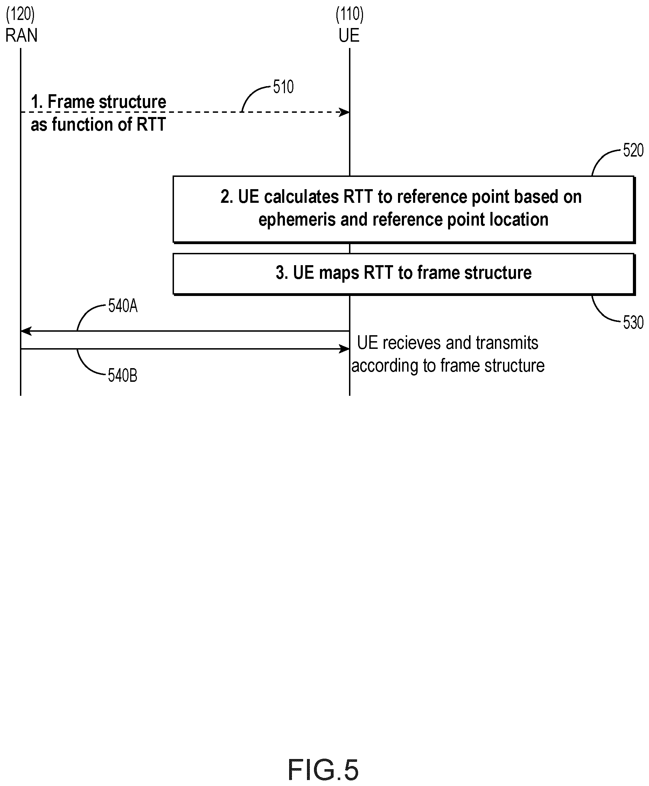

FIG. 4 illustrates a flowchart of a function adjusted TDD mode operation and sharing ratios (K) for UL/DL within a period (T_{A}); according to an example embodiment of the present disclosure. FIG. 5 illustrates signaling flows communication between a UE (110) and a NTN node (120), according to some example embodiments of the present disclosure. Both figures may be described together for brevity.

In step (410, 510), a UE (110) may receive from a RAN (a gNB or a NTN node (120)), a frame structure as function of RTT (or elevation angle Θ, time t) to a reference point (140) from RAN in addition to UL-DL sharing rules.

In step (420, 520), the UE (110) may calculate the RTT (or elevation angle Θ, time t) to reference point (140) based on ephemeris and reference point location.

In step (430, 530), the UE (110) may map the calculated RTT (or elevation angle Θ, time t) to the frame structure and use UL-DL sharing rules to determine which frame is for uplink and which frame is for downlink.

In step 440, the UE (110) may use the DL-UL knowledge to transmit (540A) or receive (540B) in the relevant frames or according to the frame structure.

Some additional points to the different steps described: The UL-DL sharing rules may be instructions how the relevant UL-DL period is shared between UL and DL.

Additionally, also a switching time may be indicated as function of the RTT (or elevation angle Θ, time t). Instead of a function of the RTT (or elevation angle Θ, time t) the UL-DL period T_{A} may also be provided as function of time.

The RAN (a gNB or a NTN node (120)) may will also provide the reference point (140). The ephemeris may be provided in SIB19, and the update of the RTT (or elevation angle Θ, time t) estimation, to guarantee full alignment between NW and UE, might be scheduled to happen at specific points in time. For example, the reference value to (RTT_{ref}, G_{ref}, t_{ref} in UTC) may be the value calculated always at SFN 0.

The UEs (110a, 110b) may determine from the RTT (or elevation angle Θ, time t) and the mapping, the TDD period T_{A}. Appropriate rounding may be done to the granularity of the RTT cycles, i.e. like to radio frames. In an example, the UE (110) may determine the RTT period and the corresponding UL-DL split and timing of the UL and downlink relate to the DL frame timing. In another example, the UE (110) may transmit/receives according to the UL-DL periods and adjust the UL-DL splits after every RTT cycle.

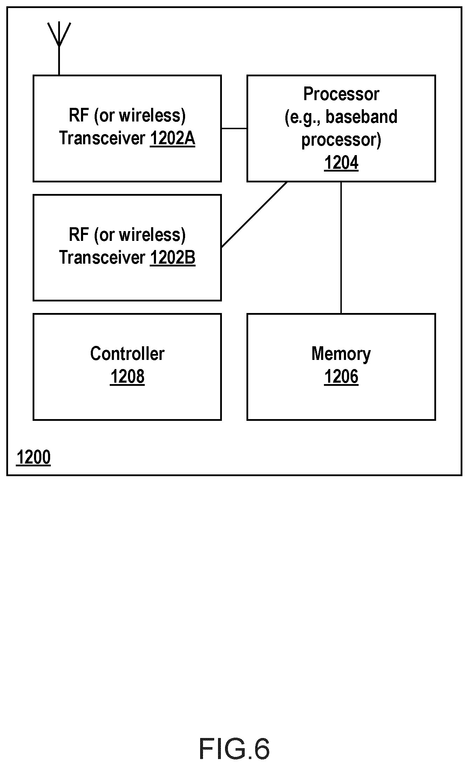

FIG. 6 illustrates a simplified block diagram of a device (1200) within a UE (110) or a NTN node (120) that may be suitable for implementing example embodiments of the present disclosure. In some example embodiments, all the example embodiments discussed with reference to FIGs. 1 to 5 may be applicable to the UE (110) or the NTN node (120). Merely for brevity, the same contents are omitted.

FIG. 6 is a block diagram of a UE (1200) or a wireless station or a node (e.g., user device, NTN node, AP, BS, eNB, gNB, RAN node, network node, TRP, or other node) 1200 according to an example embodiment. The wireless station 1200 may include, for example, one or more (e.g., two as shown in FIG. 6) RF (radio frequency) or wireless transceivers 1202A, 1202B, where each wireless transceiver includes a transmitter to transmit signals and a receiver to receive signals. The wireless station also includes a processor or control unit/entity (controller) 1204 to execute instructions or software and control transmission and receptions of signals, and a memory 1206 to store data and/or instructions.

Processor 1204 may also make decisions or determinations, generate frames, packets or messages for transmission, decode received frames or messages for further processing, and other tasks or functions described herein. Processor 1204, which may be a baseband processor, for example, may generate messages, packets, frames or other signals for transmission via wireless transceiver 1202 (1202A or 1202B). Processor 1204 may control transmission of signals or messages over a wireless network, and may control the reception of signals or messages, etc., via a wireless network (e.g., after being down-converted by wireless transceiver 1202, for example). Processor 1204 may be programmable and capable of executing software or other instructions stored in memory or on other computer media to perform the various tasks and functions described above, such as one or more of the tasks or methods described above. Processor 1204 may be (or may include), for example, hardware, programmable logic, a programmable processor that executes software or firmware, and/or any combination of these. Using other terminology, processor 1204 and transceiver 1202 together may be considered as a wireless transmitter/receiver system, for example.

In addition, referring to FIG. 6, a controller (or processor) 1208 may execute software and instructions, and may provide overall control for the station 1200, and may provide control for other systems not shown in FIG. 6, such as controlling input/output devices (e.g., display, keypad), and/or may execute software for one or more applications that may be provided on wireless station 1200, such as, for example, an email program, audio/video applications, a word processor, a Voice over IP application, or other application or software.

In addition, a storage medium may be provided that includes stored instructions, which when executed by a controller or processor may result in the processor 1204, or other controller or processor, performing one or more of the functions or tasks described above.

According to another example embodiment, RF or wireless transceiver(s) 1202A/1202B may receive signals or data and/or transmit or send signals or data. Processor 1204 (and possibly transceivers 1202A/1202B) may control the RF or wireless transceiver 1202A or 1202B to receive, send, broadcast or transmit signals or data.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer, or it may be distributed amongst a number of computers.

Furthermore, embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

In an example, a user equipment (UE) (110) for wireless communication, may include: at least one processor (1204), at least one memory (1206) storing instructions that, when executed by the at least one processor (1204), the UE (100) is caused to: receive (410, 510), from at least one non-terrestrial network node (NTN) (120) in a serving cell (130), a configuration indicating at least one of: an uplink and downlink (UL-DL) period (TA) of a periodic pattern (P_{A}) for a time division duplexing (TDD) mode operation as a function of round-trip time (RTT), and a sharing ratio (K) for UL transmissions/DL receptions; and adjust or determine (430, 530), based on the configuration according to the function of the round-trip time (RTT), to be used for the TDD mode operation in the serving cell (130).

In an example, the user equipment (110) receives the configuration via system information broadcast (SIB) or via dedicated signaling (RRC) after initial access.

In an example, the configuration includes at least one of: at least one reference point (140) used for RTT calculation, and the RTT is used to map to the UL-DL period (T_{A}) for the TDD mode operation; information on a set of time instances (t₁, t₂...tₓ) where the UL-DL period (TA) of the periodic pattern (PA) for the TDD mode operation comprises a set of values for each duration in the UL-DL period (T_{A1}, T_{A2}... ) that are associated to the set of time instances (t₁, t₂...tₓ); or a subset of allowed distributions (TA= T + R) for the UL transmissions/DL receptions.

In an example, the user equipment (110) may utilize at least one of the following rules to avoid UL/DL conflicts in the TDD mode operation: (i) the UL - DL period (T_{A}) being set to a maximum round trip time RTTₘₐₓ among all UEs (110a, 110b, ...) present in the cell (130); (ii) the UL - DL period (T_{A}) being set to a minimum round trip time RTTₘᵢₙ among all UEs (110a, 110b, ...) present in the cell (130); (iii) one or more UEs with a smaller RTT than the maximum RTTₘₐₓ loses UL opportunities, where a number of lost opportunities being a function of the differential delay ΔRTT between two UEs within the cell (130); or (iv) one or more UEs with the maximum differential delay ΔRTTₘₐₓ loses UL opportunities; wherein the maximum differential delay ΔRTTₘₐₓ being a maximum difference of the RTT among all the UEs (110a, 110b...) within the cell (130) or in another example the maximum difference of the RTT between the cell's borders (the border closest to the satellite and the border furthest away where the border can be based on radio coverage or geometry), and wherein the one or more UEs that lose the UL opportunities are being mitigated by not scheduling UL or DL subframes during first frames of downlink transmit period, where a number of the UL or DL subframes not being scheduled being a function of the maximum differential delay ΔRTTₘₐₓ.

an example, the sharing ratio (K) for UL transmissions/DL receptions being at least one of: a ratio of a number (n) of subframes for the UL transmission and a number (m) of subframes for the DL reception (K=n/m) (i.e., K is a ratio of n and m) an absolute number (n) of subframes to be used for the UL transmission and number (m) of subframes to be used for the DL reception; a percentage of the UL transmission or the DL reception; or a split of the UL-DL period (TA) in multiple or in mixed patterns within one RTT. In implementation, the sharing ratio (K) for UL transmissions/DL receptions may be a function of the RTT, the elevation angle Θ or time, anyone of which may reflect the satellite position.

In an example, the user equipment (110) and the NTN node (120) both may have a time granularity limited to subframes or symbols with rules for switching to a next RTT, wherein the switching is based on a next RTT value when a ceiling (RTT/x) reaches a next integer, wherein x is a minimum granularity duration.

In an example, the UL - wherein the periodic pattern (PA) comprises at least one of: uplink (UL) and downlink (DL) subframes (SF1, SF2... SFn) in every defined N number of radio frames having a periodicity of the UL-DL period (TA); a guard period (TG) between consecutive periods (T_{A1}, T_{A2...} ); one or more guard times (t_{g}) indicated between UL and DL subframes within the period (TA); or the one or more guard times (t_{g}) being preconfigured and the UL-DL period (T_{A}) is rounded upwards to a next frame/symbol according to a pre agreed rule.

In an example, the one or more guard times (t_{g}) are preconfigured and the UL-DL period (T_{A}) is rounded upwards to the next frame/subframe/symbol according to a pre-defined rule.

In an example, the function of RTT in the system broadcast information (SBI) or the dedicated signaling (RRC) utilizes at least one of: the UL-DL period (T_{A}) as a function of the RTT for the UE (110) is based on at least one reference RTT_{ref} of at least one reference point (140) , which the UE (110) uses the reference RTT_{ref} to deduce the RTT for the UE (110) to get a same understanding as the network of the period (TA); or the UL-DL period (TA) is provided as a function of another reference time RTT_{ref}, which is used as a proxy for the RTT of the UE (110) , wherein the another reference time RTT_{ref} is extracted from network parameters comprising at least one of: K_offset, or K_mac.

In an example, the serving cell (130) further provides switching times between uplink and downlink as function of either RTT or time instances (t₁, t₂...tₓ), provided that the NTN (120, 1204) is aware of the RTT of the UE (110) or its location.

In an example, the UE (110) transmit/receives according to the UL-DL periods (T_{A}) and adjust the UL-DL splits after every RTT cycle.

In an example, the UE (110) performs at least one of: calculates (420, 520) the RTT to the at least one reference point (140) based on ephemeris and location of the reference point (140); maps (430, 530) the calculated RTT to a frame structure and uses UL-DL sharing rules to determine which frame is UL and which is DL; or use DL-UL knowledge (440, 530a, 540b) to transmit/receive in the relevant frames according to the frame structure.

In an example, a non-terrestrial network (NTN) node (120) is disclosed, which may include: at least one processor (1204); and at least one memory (1206) storing instructions that, when executed by the at least one processor (1204), cause the network node (120) to: transmit (410, 510) to at least one user equipment (UE) (110), a configuration indicating at least one of: an uplink and downlink (UL-DL) period (T_{A}) of a periodic pattern (P_{A}) for a time division duplexing (TDD) mode operation as a function round-trip time (RTT), and a sharing ratio (K) for UL-DL transmissions/receptions; and transmit to, or receive from the at least one user equipment (110), a frame structure of the UL-DL that matches the indicated periodic pattern (P_{A}).

In an example, a user equipment (UE) (110) for communication is disclosed, which may include: means for receiving (410, 510), from at least one non-terrestrial network node (NTN) (120) in a serving cell (130), a configuration indicating at least one of: an uplink and downlink (UL-DL) period (T_{A}) of a periodic pattern (P_{A}) for a time division duplexing (TDD) mode operation as a function of round-trip time (RTT), and a sharing ratio (K) for UL transmissions/DL receptions; and means for adjusting or determining (430, 530), based on the configuration according to the function of the round-trip time (RTT), to be used for the TDD mode operation in the serving cell (130).

In an example, a non-terrestrial network (NTN) node (120) is disclosed, which may include: means for transmitting (410, 510), to at least one user equipment (UE) (110), a configuration indicating at least one of: an uplink and downlink (UL-DL) period (T_{A}) of a periodic pattern (P_{A}) for a time division duplexing (TDD) mode operation as a function round-trip time (RTT), and a sharing ratio (K) for UL-DL transmissions/receptions; and means for transmitting to, or receiving from the at least one user equipment (110), a frame structure of the UL-DL that matches the indicated periodic pattern (P_{A}).

In an example, a method for communication may include: receiving (410, 510) by a user equipment (UE) (110), from at least one non-terrestrial network node (NTN) (120) in a serving cell

(130), a configuration indicating at least one of: an uplink and downlink (UL-DL) period (T_{A}) of a periodic pattern (P_{A}) for a time division duplexing (TDD) mode operation as a function of round-trip time (RTT), and a sharing ratio (K) for UL transmissions/DL receptions; and adjusting or determining (430, 530), based on the configuration according to the function of the round-trip time (RTT), to be used for the TDD mode operation in the serving cell (130).

In an example, a method for communication may include: transmitting (410, 510) by a non-terrestrial network (NTN) node (120), to at least one user equipment (UE) (110), a configuration indicating at least one of: an uplink and downlink (UL-DL) period (TA) of a periodic pattern (P_{A}) for a time division duplexing (TDD) mode operation as a function round-trip time (RTT), and a sharing ratio (K) for UL-DL transmissions/receptions; and transmitting to, or receiving from the at least one user equipment (110), a frame structure of the UL-DL that matches the indicated periodic pattern (P_{A}).

In an example, a non-transitory computer readable medium, that computer-executable instructions, when being executed in a user equipment (UE) on a physical or virtual processor, enables the UE to carry out functions or features that have been described about the UE (110).

Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

## Claims

1. A user equipment (UE) (110) for wireless communication, comprising:
at least one processor (1204); and
at least one memory (1206) storing instructions that, when executed by the at least one processor (1204), cause the UE (100) to:
receive (410, 510), from at least one non-terrestrial network node (NTN) (120) in a serving cell (130), a configuration indicating at least one of: an uplink and downlink (UL-DL) period (T_{A}) of a periodic pattern (P_{A}) for a time division duplexing (TDD) mode operation as a function of round-trip time (RTT), and a sharing ratio (K) for UL transmissions/DL receptions; and
adjust or determine (430, 530), based on the configuration according to the function of the round-trip time (RTT), to be used for the TDD mode operation in the serving cell (130).

2. The user equipment (110) of claim 1, wherein the UE receives the configuration via system information broadcast (SIB) or via dedicated signaling (RRC) wherein the dedicated signaling may be provided after initial access.

3. The user equipment (110) of anyone of claims 1 to 2, wherein the configuration includes at least one of:
at least one reference point (140) used for RTT calculation, and the RTT is used to map to the UL-DL period (T_{A}) for the TDD mode operation ;
information on a set of time instances (t₁, t_{2...}tₓ) where the UL-DL period (T_{A}) of the periodic pattern (P_{A}) for the TDD mode operation comprises a set of values for each duration in the UL-DL period (T_{A1}, T_{A2...} ) that are associated to the set of time instances (t₁, t₂...tₓ); or
a subset of allowed distributions (T_{A}= T + R) for the UL transmissions/DL receptions.

4. The user equipment (110) of anyone of claims 1 to 3, wherein the UE (110) utilizes at least one of the following rules to avoid UL/DL conflicts in the TDD mode operation:
(i) the UL - DL period (T_{A}) being set to a maximum round trip time RTTₘₐₓ among all UEs (110a, 110b, ...) present in the cell (130);
(ii) the UL - DL period (T_{A}) being set to a minimum round trip time RTTₘᵢₙ among all UEs (110a, 110b, ...) present in the cell (130);
(iii) one or more UEs with a smaller RTT than the maximum RTTₘₐₓ loses UL opportunities, where a number of lost opportunities being a function of the differential delay ΔRTT between two UEs within the cell (130);; or
(iv) one or more UEs with the maximum differential delay ΔRTTₘₐₓ loses UL opportunities;
wherein the maximum differential delay ΔRTTₘₐₓ being a maximum difference of the RTT among all the UEs (110a, 110b...) within the cell (130), and wherein the one or more UEs that lose the UL opportunities are being mitigated by not scheduling UL or DL subframes during first frames of downlink transmit period, where a number of the UL or DL subframes not being scheduled being a function of the maximum differential delay ΔRTTₘₐₓ.

5. The user equipment (110) of anyone of claims 1 to 4, wherein the sharing ratio (K) for UL transmissions/DL receptions being at least one of:
a ratio of a number (n) of subframes for the UL transmission and a number (m) of subframes for the DL reception (K=n/m)
an absolute number (n) of subframes to be used for the UL transmission and number (m) of subframes to be used for the DL reception;
a percentage of the UL transmission or the DL reception;
a split of the UL-DL period (T_{A}) in multiple or in mixed patterns within one RTT; or
the sharing ratio (K) for UL transmissions/DL receptions being a function of the RTT.

6. The user equipment (110) of claim 4, wherein the UE (110) and the NTN node (120) both having a time granularity limited to subframes or symbols with rules for switching to a next RTT, wherein the switching is based on a next RTT value when a ceiling (RTT/x) reaches a next integer, wherein x is a minimum granularity duration.

7. The user equipment (110) of anyone of claims 1 to 5, wherein the periodic pattern (P_{A}) comprises at least one of:
uplink (UL) and downlink (DL) subframes (SF1, SF2... SFn) in every defined N number of radio frames having a periodicity of the UL-DL period (T_{A});
a guard period (T_{G}) between consecutive periods (T_{A1,} T_{A2}...
one or more guard times (t_{g}) indicated between UL and DL subframes within the period (T_{A}); or
the one or more guard times (t_{g}) being preconfigured and the UL-DL period (T_{A}) is rounded upwards to a next frame/symbol according to a pre agreed rule.

8. The user equipment (110) of claim 6, wherein the one or more guard times (t_{g}) are preconfigured and the UL-DL period (T_{A}) is rounded upwards to the next frame/subframe/symbol according to a pre-defined rule.

9. The user equipment (110) of claim 2, wherein the function of RTT in the system broadcast information (SBI) or the dedicated signaling (RRC) utilizes at least one of:
the UL-DL period (T_{A}) as a function of the RTT for the UE (110) is based on at least one reference RTT_{ref} of at least one reference point (140) , which the UE (110) uses the reference RTT_{ref} to deduce the RTT for the UE (110) to get a same understanding as the network of the period (T_{A}); or
the UL-DL period (T_{A}) is provided as a function of another reference round trip time RTT_{ref}, which is used as a proxy for the RTT of the UE (110) , wherein the another reference round trip time RTT_{ref} is extracted from network parameters comprising at least one of: K_offset, or K_mac.

10. The user equipment (110) of anyone of claims 1 to 8, wherein the serving cell (130) further provides switching times between uplink and downlink as function of either RTT or time instances, provided that the NTN (120, 1204) is aware of the RTT of the UE (110) or its location.

11. The user equipment (110) of anyone of claims 1 to 9, wherein the UE (110) transmit/receives according to the UL-DL periods (T_{A}) and adjust the UL-DL splits after every RTT cycle.

12. The user equipment (110) of anyone of claims 1 to 11, wherein the UE (110) performs at least one of:
calculates (420, 520) the RTT to the at least one reference point (140) based on ephemeris and location of the reference point (140);
maps (430, 530) the calculated RTT to a frame structure and uses UL-DL sharing rules to determine which frame is UL and which is DL; or
use DL-UL knowledge (440, 530a, 540b) to transmit/receive in the relevant frames according to the frame structure.

13. A non-terrestrial network (NTN) node (120) comprising:
at least one processor (1204); and
at least one memory (1206) storing instructions that, when executed by the at least one processor (1204), cause the network node (120) to:
transmit (410, 510) to at least one user equipment (UE) (110), a configuration indicating at least one of: an uplink and downlink (UL-DL) period (T_{A}) of a periodic pattern (P_{A}) for a time division duplexing (TDD) mode operation as a function round-trip time (RTT), and a sharing ratio (K) for UL-DL transmissions/receptions; and
transmit to, or receive from the at least one user equipment (110), a frame structure of the UL-DL that matches the indicated periodic pattern (P_{A}).

14. A user equipment (UE) (110) for communication, comprising:
means for receiving (410, 510), from at least one non-terrestrial network node (NTN) (120) in a serving cell (130), a configuration indicating at least one of: an uplink and downlink (UL-DL) period (T_{A}) of a periodic pattern (P_{A}) for a time division duplexing (TDD) mode operation as a function of round-trip time (RTT), and a sharing ratio (K) for UL transmissions/DL receptions; and
means for adjusting or determining (430, 530), based on the configuration according to the function of the round-trip time (RTT), to be used for the TDD mode operation in the serving cell (130).

15. A non-terrestrial network (NTN) node (120) comprising:
means for transmitting (410, 510), to at least one user equipment (UE) (110), a configuration indicating at least one of: an uplink and downlink (UL-DL) period (T_{A}) of a periodic pattern (P_{A}) for a time division duplexing (TDD) mode operation as a function round-trip time (RTT), and a sharing ratio (K) for UL-DL transmissions/receptions; and
means for transmitting to, or receiving from the at least one user equipment (110), a frame structure of the UL-DL that matches the indicated periodic pattern (P_{A}).
